# EUROPEAN PATENT APPLICATION

(11) **EP 4 137 356 A1**
(43) Date of publication of application: **22.02.2023**
(21) Application number: 21191743.0
(22) Date of filing: 17.08.2021
(51) Int. Cl.: B60L 53/80, B25J 5/00, B25J 18/00, B60S 5/06, B60L 53/30, B25J 19/00, B25J 19/02, B25J 19/06, B25J 9/16, G05D 1/02

(54) **MOBILE ROBOT DEVICE AND METHOD FOR OPERATING A MOBILE ROBOT DEVICE**

(71) Applicant: OMRON Corporation, Shiokoji-dori, Shimogyo-ku, Kyoto-shi Kyoto 600-8530 (JP)
(72) Inventor: Bischoff, Gunnar, 40597 Düsseldorf (DE); Lange, Peter, 99092 Erfurt (DE); Neues, Arndt, 72766 Reutlingen (DE); Ohlmeier, Stephan, 44263 Dortmund (DE); Vogel, Thomas, 40589 Düsseldorf (DE)
(74) Representative: Horn Kleimann Waitzhofer Patentanwälte PartG mbB

(57) **Abstract**

A mobile robot device (1, 50, 51, 52), comprising:
a vehicle unit (2) for displacing the mobile robot device (1, 50, 51, 52);
a robot unit (3) carried by the vehicle unit (2), the robot unit (3) including at least one moveable robot arm (4);
a first battery (5) arranged within the robot unit (3) and configured to provide the moveable robot arm (4) with electric power; and
an auxiliary battery (6) arranged within the mobile robot device (1, 50, 51, 52); wherein
the moveable robot arm (4) is configured to replace the first battery (5) with a replacement battery (7) or with the auxiliary battery (6); and
the auxiliary battery (6) is configured to provide the moveable robot arm (4) with electric power to replace the first battery (5) with the replacement battery (7).

## Description

The present invention relates to a mobile robot device. The present invention further relates to a method for operating such a mobile robot device and to a computer program product for carrying out such a method.

Mobile robot devices usually include an installed battery for displacing the entire robot device and for actuating moveable robot arms or the like. The installed battery may need regular recharging making the robot device unavailable during charging time.

US 4,700,121 A discloses an autonomous battery exchange solution for a mobile unit with a robot arm. The mobile unit positions itself at a station, disconnects its internal battery and gets instead powered by an auxiliary power supply from the station to perform the battery exchange.

It is one object of the present invention to provide an improved mobile robot device.

According to a first aspect, a mobile robot device is provided. The mobile robot device comprises:
a vehicle unit for displacing the mobile robot device;
a robot unit carried by the vehicle unit, the robot unit including at least one moveable robot arm;
a first battery arranged within the robot unit and configured to provide the moveable robot arm with electric power; and
an auxiliary battery arranged within the mobile robot device; wherein
the moveable robot arm is configured to replace the first battery with a replacement battery or with the auxiliary battery; and
the auxiliary battery is configured to provide the moveable robot arm with electric power to replace the first battery with the replacement battery.

The mobile robot device can replace the first battery in an entirely autonomous manner by using power from the auxiliary battery while performing the battery replacement. The battery replacement itself is performed using the moveable robot arm integrated with the mobile robot arm. The mobile robot device can replace its own first battery without relying on any external devices, thereby improving its flexibility, reducing a number of components and reducing an amount of space required for changing the first battery. Since the first battery can be replaced, the mobile robot device further does not need to wait for the first battery to charge, thereby improving the availability of the mobile robot device. Autonomously replacing the first battery is further advantageous in cases in which an energy consumption of the robot unit is higher than an energy consumption of the vehicle unit.

The mobile robot device (also just referred to as "robot device" in the following) may be a moveable device with robot functionalities. The vehicle unit of the mobile robot device can allow displacing the entire mobile robot device. To this end, the vehicle unit may include one or multiple wheels, one or multiple continuous tracks, one or multiple legs, preferably articulated legs or the like. The vehicle unit can preferably displace the mobile robot device along two dimensions.

The robot unit being carried by the vehicle unit in particular means that the vehicle unit holds the robot unit and/or that the robot unit is mechanically attached to the vehicle unit. In particular, the vehicle unit carries the robot unit such that a displacement of the vehicle unit induces a displacement of the robot unit. The robot unit is the portion of the mobile robot device which allows performing robot operations. To this end, the robot unit includes the moveable robot arm (also just referred to as "robot arm" in the following), which is preferably an articulated arm. The moveable robot arm can include one or multiple tools attached thereto and can be used to grip, drill, rotate, polish, paint or the like a component. The component may be a component to be manufactured and/or repaired. The mobile robot device may be used in a production line, in a laboratory or the like.

The robot unit may include multiple robot arms which are separately actionable. These multiple robot arms may be powered by a single first battery or by multiple first batteries, which each may be replaced as will be described further below.

The vehicle unit and the robot unit may be two units which can be used independently from one another. In the mobile robot device, the vehicle unit carries the robot unit, in particular in a removeable manner.

The first battery in particular powers the robot arm and/or a motor driving the robot arm in order to move the robot arm as required. During normal operation of the first battery, in particular when its charge level exceeds a predetermined threshold, it may be electrically connected to the robot arm to power the same. For example, during normal operation of the first battery, the robot arm gets powered only by the first battery. The first battery is part of the robot unit. It may be located in a battery slot of the robot unit. The first battery may be a rechargeable battery. In some embodiments, the first battery may also be used to power the vehicle unit. However, the first battery is usually used only to power the robot unit.

The auxiliary battery can be located either in the vehicle unit or in the robot unit. The auxiliary battery may be used to power the vehicle unit to displace the mobile robot device. The auxiliary battery is configured to power the robot arm at least temporarily, as will be explained further below.

The robot arm may be used to exchange the first battery. In particular, the robot arm may be configured to grip the first battery, extract it from the robot unit, displace the first battery to a storage place, grip the replacement battery, and/or correctly place it inside the robot unit so that the replacement battery gets connected with the robot arm. The replacement battery may be a battery of the same or similar type as the first battery. Once installed within the robot unit, its functionalities may be identical with the functionalities of the previously used first battery. The replacement battery can be considered as forming a (new) first battery.

Instead of inserting an external replacement battery, the auxiliary battery of the mobile robot device can be used directly to replace the first battery. Particularly, the first battery and the auxiliary battery are both arranged in neighboring slots and the auxiliary battery can take over the functionality of the first battery when needed.

During exchange of the first battery, the auxiliary battery may at least temporarily replace the first battery and power the robot arm to perform the battery replacement. In particular, once the battery replacement is ended, the auxiliary battery no longer powers the robot arm and the robot arm is instead powered by the installed replacement battery. Alternatively, it is possible to keep the auxiliary battery as replacing the first battery.

According to an embodiment, the auxiliary battery is a second battery arranged within the robot unit and exclusively configured to provide the robot unit with electric power and/or a third battery arranged within the vehicle unit and further configured to provide the vehicle unit with electric power for displacing the mobile robot device.

The second battery may be configured to provide only the robot arm with electric power. The second battery can be seen as a redundant battery, wherein the robot unit can switch between connecting the first battery and connecting the second battery to the robot arm for electric powering of the robot arm. In this case, no replacement battery may be needed when the first battery is replaced.

In a normal operation stage in which the robot arm is powered by the first battery, the third battery may only power the vehicle unit for the vehicle unit to displace the mobile robot device. In the normal operation stage, the third battery may be electrically disconnected from the mobile robot device.

According to a further embodiment, the mobile robot device further comprises a switching unit for switching an electric power supply to the moveable robot arm between the first battery and the auxiliary battery.

The switching unit may a physical switch for selectively connecting either the first battery or the auxiliary battery with the robot arm in an electric manner. The position (state) of the switching unit may be controlled by a controller, for example a CPU (central processing unit) of the mobile robot device. The position of the switching unit may be selected in accordance with a state of charge of the first battery, a duration for which the first battery has been used or connected to the robot arm, and/or a scheduled replacement time for replacing the first battery. The position of the switching unit may be controlled automatically, without requiring an operator to perform a manual switching operation.

According to a further embodiment,
the vehicle unit and/or the robot unit includes a sensor unit for determining properties of the area surrounding the vehicle unit as surrounding information; and
the vehicle unit includes:
   an identification unit for identifying a location of a charging station providing the replacement battery based on the surrounding information;
   a path determination unit for determining a path to the charging station based on the identified location of the charging station; and
   a control unit for controlling the vehicle unit to autonomously displace the mobile robot device to the charging station following the determined path.

The sensor unit may include one or multiple GPS sensors for determining a GPS position of the robot device, one or multiple radar devices for determining a distance to objects surrounding the robot device, one or multiple cameras for capturing images of the surroundings of the robot device and/or the like. The sensor unit may be connected to a processor unit which receives data output (surrounding information) from the sensor unit. The mobile robot device, in particular the processor unit, may use the data from the sensor unit to determine a location and/or orientation of the mobile robot device in space. In particular, the mobile robot device may have prestored maps or downloaded maps of an area in which it circulates. Alternatively, the mobile robot device can use the data from the sensor unit to generate its own maps and/or to improve existing maps. Using the data from the sensor unit, the mobile robot independently gains knowledge about its position and/or orientation in space.

The charging station may be a location at which charged batteries including the replacement battery are located. The charging station may also be capable of performing charging of the first battery once it is removed from the robot device. The charging station can also be used to charge the auxiliary battery. Charging of the batteries can be performed via a cabled charger or by inductive charging at a charging unit of the charging station.

The identification unit may identify the location of the charging station by performing image recognition of the surrounding information captured by the sensor unit. Alternatively, the identification unit may identify the location of the charging station by observing a provided map of an area surrounding the mobile robot device. The path determination unit in particular allows calculating how the mobile robot device should displace itself to reach the charging station, in particular which path the robot device should follow. Instructions for accordingly displacing the robot device by the vehicle unit may be generated. The control unit (for example, a processor), can send instructions to the vehicle unit that instruct the vehicle unit how to move the robot device to the charging station.

The robot device can thus autonomously determine a path to the charging station and move to the charging station in an autonomous and automatic manner. The management and handling of the battery exchange is carried out autonomously by the robot device.

According to a further embodiment, the sensor unit includes a camera, a proximity sensor, a temperature sensor and/or a radar.

The camera may be used for continuously or discontinuously capturing pictures or videos of the surroundings of the robot device, for example for capturing 360° pictures or videos. The proximity sensor may be a sensor detecting a distance to an object near the robot device, for example for detecting when the object is closer than a predetermined distance. The temperature sensor may detect temperature gradients around the robot device to determine locations of objects. The radar may be used to determine a distance to objects surrounding the robot device. According to a further embodiment, the mobile robot device includes a determination unit for determining whether it is time to replace the first battery, and wherein the control unit is configured to control the vehicle unit to autonomously displace the mobile robot device to the charging station following the determined path if the determination unit determines that it is time to replace the first battery.

The determination unit may have an internal clock. The determination unit may calculate a time at which the first battery should be replaced. When the internal clock indicates the time at which the first battery should be replaced, the robot device autonomously initiates replacement of the first battery. This included a displacement to the charging station.

According to a further embodiment, the determination unit determines that it is time to replace the first battery when:
a state of charge of the first battery is detected to be below a predefined state of charge threshold;
the first battery has been present in the robot unit for a predefined duration or more;
a process performed by the mobile robot device schedules a replacement of the first battery.

The predefined state of charge threshold may be a state of charge of 30%, 20% or less. The predefined state of charge threshold is in particular sufficiently high to avoid running too low on battery power to operate the robot arm and also sufficiently high to increase the lifetime of the battery. At the same time, the predefined state of charge threshold may be low enough to avoid a frequent replacement and charging of the battery.

The first battery having been present in the robot unit for a predefined duration or more may mean that the first battery has been electrically connected to the robot arm for the predefined duration or more, in particular providing the robot arm with electric power for the predefined duration or more. The predefined duration can be one or multiple hours or up to multiple days. The length of the predefined duration strongly depends on the capacity of the first battery and on the quantity of power required by the robot arm.

A process performed by the mobile robot device may schedule a replacement of the first battery for example at regular time intervals, prior to starting an assembly of a particular product, when the robot device is inactive for a particular amount of time, after performing a power-intensive task or the like.

The determination unit in particular allows determining the time to replace the first battery in a manner that always guarantees sufficient battery power for the robot arm, thereby improving the overall reliability of the robot device. Preferably, the determination unit schedules the replacement of the first battery to avoid inconveniences (for example when the robot device is inactive for a particular amount of time or when it passes near the charging station anyway), thereby reducing a duration during which the robot device is inactive.

According to a further embodiment, the moveable robot arm is configured to exclusively receive electric power from the auxiliary battery and/or the first battery to replace the first battery with the replacement battery or the auxiliary battery.

In particular, the moveable robot arm solely relies on the electric power from the first battery and/or the auxiliary battery to replace the first battery. In other words, the moveable robot arm (and preferably the entire mobile robot device) does not receive any external electric power to perform the battery replacement. A more independent robot device is thereby achieved.

According to a further embodiment, the robot unit and the vehicle unit are removably connected to one another in a mechanical, electrical and/or communicative manner.

In particular, the robot unit and the vehicle unit are configured to operate independently from one another in a state in which they are disconnected from each other. This means that the vehicle unit may displace itself in an intelligent manner even without the robot unit being attached thereto. The robot unit may perform tasks using the robot arm even without being attached to the vehicle unit.

The mechanical connection between the robot unit and the vehicle unit may include screws, snaps or the like. The electrical connection between the robot unit and the vehicle unit may include the possibility of using the battery of the vehicle unit (for example the auxiliary battery) to power the robot arm, for example. The communicative connection between the robot unit and the vehicle unit may include controlling the charging station using the vehicle unit when the first battery of the robot unit needs to be replaced.

According to a further embodiment, the moveable robot arm is configured to replace the first battery by:
opening a door of a slot holding the first battery;
electrically disconnecting the first battery from the robot unit;
removing the first battery from its slot;
placing the first battery into a charging compartment in the charging station;
picking up the replacement battery from the charging station and inserting it into the slot of the mobile robot device;
connecting the replacement battery to the robot unit; and/or closing the door of the slot.

In particular, the robot arm performs the above tasks while being powered by the auxiliary battery (except the task of opening the door which may be performed while the robot arm is powered by the first battery). After finishing these tasks, the robot arm may be electrically disconnected from the auxiliary battery and the replacement battery may take over the powering of the robot arm.

According to a further embodiment, the vehicle unit is further configured to displace the mobile robot device such as to electrically connect the third battery with a charging unit of the charging station.

For example, the vehicle unit places the robot device such that the third battery is electrically in contact (physical connection) with the charging unit. The charging unit may also perform inductive charging (wireless) of the third battery.

According to a second aspect, a method for operating a mobile robot device, in particular the mobile robot device according to the first aspect or according to an embodiment thereof, is provided. The method includes:
displacing the mobile robot device using a vehicle unit;
moving a moveable robot arm of a robot unit using electric power from a first battery arranged within the robot unit; and
replacing the first battery with a replacement battery or by an auxiliary battery of the mobile robot device using the moveable robot arm, wherein during the replacement of the first battery by the replacement battery, the moveable robot arm is electrically powered by the auxiliary battery.

The embodiments and features described with reference to the mobile robot device of the first aspect apply mutatis mutandis to the method of the second aspect.

According to an embodiment, the method comprises:
switching the electric power provision to the moveable robot arm from the first battery to the auxiliary battery for the replacement of the first battery.

In particular, the electric power provision is switched using the switching unit described above. For example, the electric power provision is switched to the auxiliary battery only for the duration of replacing the first battery.

According to a further embodiment, the mobile robot device includes several slots which are each configured to hold one of the batteries, and wherein the replacement of the first battery includes:
inserting the replacement battery into an empty slot of the several slots using the moveable robot arm using electric power from the first battery;
switching a power source for powering the robot unit from the first battery to the replacement battery; and
removing the first battery from its slot with the moveable robot arm using electric power from the replacement battery.

The replacement of the first battery may be performed using only power from the first battery and the replacement battery.

According to a third aspect, a computer program product comprising instructions which, when the program is executed by a computer, cause the computer to carry out the method of the second aspect or of an embodiment thereof, is provided.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the device and method of the first and second aspects and of the corresponding embodiments apply mutatis mutandis to the computer program product of the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a mobile robot device according to a first embodiment;
- Fig. 2: shows a method for operating a mobile robot device according to a first embodiment;
- Fig. 3: shows an example of a production system including a mobile robot device according to a second embodiment;
- Fig. 4: shows an example of a map;
- Fig. 5: shows the production system of Fig. 3 with the mobile robot device at a charging station;
- Fig. 6: shows a method for operating a mobile robot device according to a second embodiment;
- Fig. 7: shows a mobile robot device according to a third embodiment;
- Fig. 8: shows a mobile robot device according to a fourth embodiment; and
- Fig. 9: shows a method for operating a mobile robot device according to a third embodiment.

In the Figures, like reference numerals designate like or functionally equivalent elements, unless otherwise indicated.

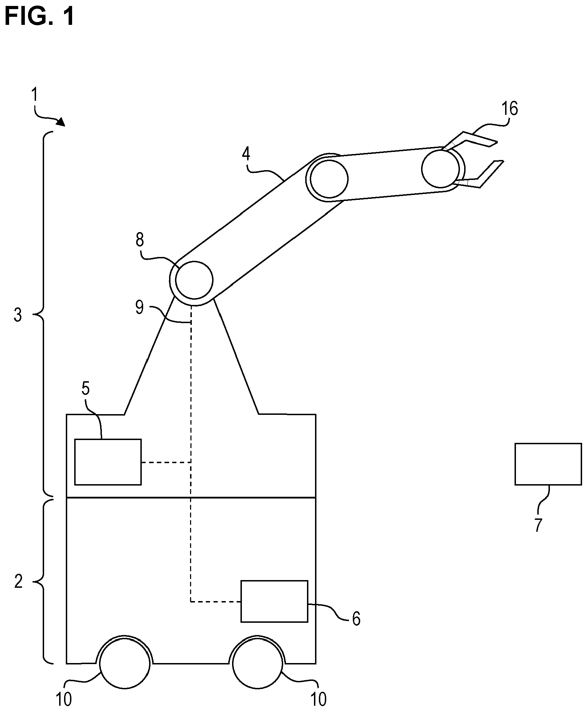

Fig. 1 shows a mobile robot device 1 according to a first embodiment. The mobile robot device 1 includes a vehicle unit 2 on top of which a robot unit 3 is attached. The vehicle unit 2 includes wheels 10 for displacing the mobile robot device 1 along the floor of a production hall, in which the robot device 1 is used to produce a product. The vehicle unit 2 allows the robot device 1 to be displaced anywhere in the production hall. To this end, the vehicle unit 2 includes a motor for driving the wheels 10 and a controller for controlling the motor (the motor and the controller are not shown in Fig. 1). The motor is powered with electric energy from an auxiliary battery 6 located in the vehicle unit 2. The auxiliary battery 6 is an example of a third battery.

The robot unit 3 is mechanically attached to the vehicle unit 2 by means of a screw connection system. When the vehicle unit 2 moves, the robot unit 3 is displaced at the same time as the vehicle unit 2. The robot device 1 therefore form a single unit that is displaceable as a whole.

The robot unit 3 includes a moveable robot arm 4 with a robot tool 16 at its end. In the example of Fig. 1, the robot tool 16 is a clamp, which allows gripping objects, for example to displace and/or rotate them. As an example, the robot tool 16 may be used to grip a replacement battery 7 provided neat the robot device 1 for the purpose of replacing the first battery 1 by a charged replacement battery 7. The robot arm 4 is driven by at least one motor 8, which is powered by a first battery 5 located in the robot unit 3. The powering of the motor 8 may be controlled by a controller of the robot unit 3 (not shown in Fig. 1).

In Fig. 1, the dashed line indicates the possibility of an electric connection 9 between the first battery 5 and the motor 8 and between the auxiliary battery 6 and the motor 8, respectively. In other words, the first battery 5 and the auxiliary battery 6 are both configured to provide the robot arm 4 with electric power. The first battery 5 and the auxiliary battery 6 relay each other to power the robot arm 4, as will be detailed below.

Although the vehicle unit 2 and the robot unit 3 are shown in a state in which they are attached to each other in Fig. 1, they may also be used separately from one another. For example, the vehicle unit 2 may drive around autonomously even without the robot unit 3 being attached thereto or with the robot unit 3 being turned off. Similarly, the robot unit 3 may perform operations with the robot arm 4 even when the robot unit 3 is not carried by the vehicle unit 2 or when the vehicle unit is turned off. Combining the robot unit 3 and the vehicle unit 2 increases the flexibility and range of use of the entire robot device 1.

The coupling between the vehicle unit 2 and the robot unit 3 is not only a mechanical coupling, it is further an electric and communicative coupling. In detail, as shown in Fig. 1, the vehicle unit 2 and the robot unit 3 provide matching interfaces that allow an electrical coupling of the auxiliary battery 6 with the robot arm 4 via the connection 9. The vehicle unit 2 and the robot unit 3 (in particular their respective controllers) may further communicate to determine a timing at which the first battery 5 and the auxiliary battery 6 powers the robot arm 4, respectively, as will be explained below.

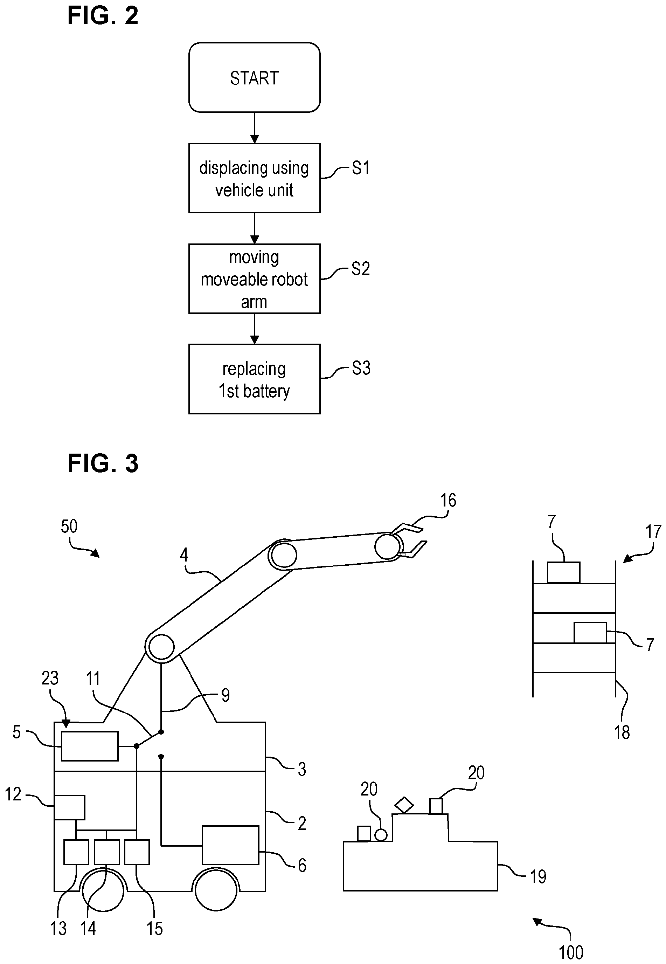

Fig. 2 shows a method for operating the mobile robot device 1 according to a first embodiment. In a step S1 of the method of Fig. 2, the robot device 1 is displaced using the vehicle unit 2 using power from the auxiliary battery 6. In a step S2 of Fig. 2, the robot arm 4 is moved using electric power from the first battery 5.

In a step S3 of the method of Fig. 2, the first battery 5 is replaced by the replacement battery 7 using the robot arm 4. In detail, the mobile robot device 1 replaces the first battery 5 autonomously, without requiring any external tool or human intervention. In detail, the robot arm 4 is used to remove the first battery 5 from the robot unit 3 and to insert the replacement battery 7 at the former location of the first battery 5. The replacement battery 7 is a battery of the same type as the first battery 5. Once the replacement battery 7 is inserted in the robot unit 3 and correctly connected, it takes over all the functionalities of the former first battery 5 (including powering the robot arm 4). The replacement battery 7 can be considered as forming a new first battery 5.

During the replacement process of step S3, the robot arm 4 is no longer powered by the first battery 5. Rather, it is powered by the auxiliary battery 6 for the duration of the replacement process.

This allows an autonomous and efficient replacement of the first battery 5 by the replacement battery 7. After the replacement process, the removed first battery 5 may be recharged for a subsequent replacement of the first battery 5.

Fig. 3 shows an example of a production system 100 including a mobile robot device 50 according to a second embodiment. The production system 100 allows producing a product. The mobile robot device 50 allows assembling components 20 into a product. Besides the robot device 50, the production system 100 further includes a charging station 17 and an obstacle 19 on which the components 20 are placed.

The robot device 50 of Fig. 3 is mostly identical with the robot device 1 of Fig. 1 so that only differences will be described in the following. In particular, the robot device 50 further includes a switching unit 11, a sensor unit 12, an identification unit 13, a path determination unit 14 and a control unit 15. The functions of these units 11 - 15 will be described in greater detail below.

The charging station 17 includes a rack 18 for holding replacement batteries 7. The rack 18 includes a charging unit allowing charging of the replacement batteries 7 which are deposited on the rack 18. Colored lights indicating a state of charge of the replacement batteries 7 are provided next to each replacement battery 7 such that the robot device 50 can take a charged replacement battery 7 when replacing the first battery 5.

The switching unit 11 is a mechanical switch which allows switching the power supply to the robot arm 4 between the first battery 5 and the auxiliary battery 6. In the example of Fig. 3, the switching unit 11 is in a position that allows only the first battery 5 to power the robot arm 4. No electrical connection is provided between the auxiliary battery 6 and the robot arm 4 in Fig. 3.

The sensor unit 12 includes a radar which allows determining a distance and position of objects surrounding the robot device 1 and a camera which allows capturing images of the area surrounding the robot device 1. The sensor unit 12 is constantly turned on in order to get a full picture of the surroundings of the robot device 1. In the example of Fig. 3, the sensor unit 12 determines a distance and location of the obstacle 19 and of the charging station 17 and identifies the nature of the surrounding objects.

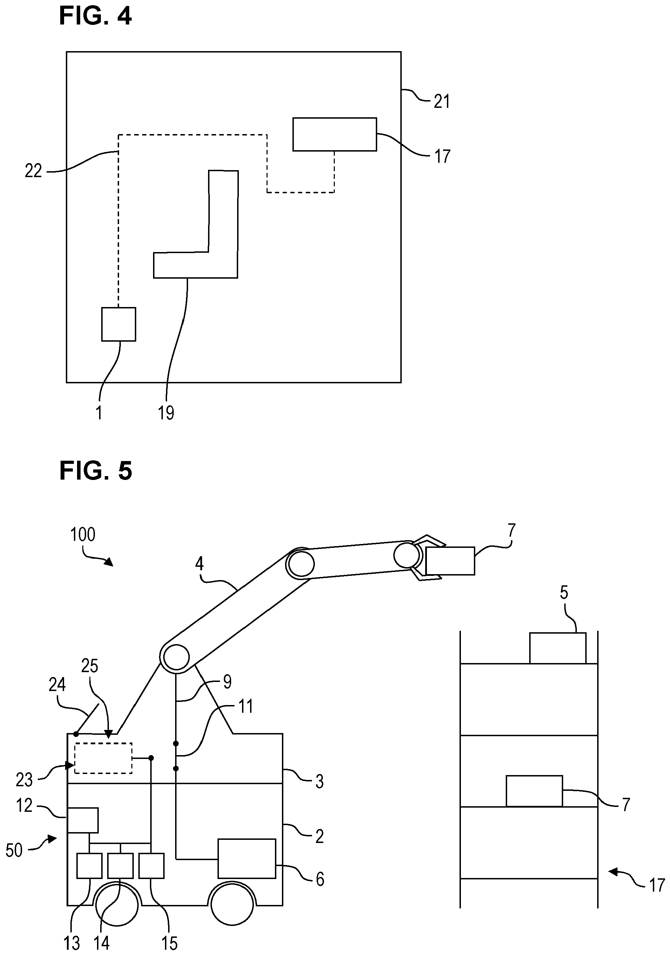

The identification unit 13 allows identifying the location of the charging station 17. To this end, the identification unit 13 receives the surrounding information captured by the sensor unit 12. The identification unit 13 generates a map 21 of the production system 100 using the surrounding information from the sensor unit 12. An example of such a map 21 is shown in Fig. 4. The map 21 indicates the position and type of objects located in the production system 100.

The path determination unit 14 receives the map 21 generated by the identification unit 13 and determines a path 22 from the robot device 1 to the charging station 17 taking into account obstacles 19 and dimensions of the different objects.

The control unit 15 is configured to use the path information generated by the path determination unit 14 to control the vehicle unit 2 such that it displaces the robot device 1 to the charging station 17. In detail, the control unit 15 provides instructions to the motor of the vehicle unit 2 allowing the vehicle unit 2 to drive to the charging station 17.

Preferably, the vehicle unit 2 drives to the charging station 17 when a particular condition is fulfilled. Such a condition may be that the robot unit 3 will not be used for a predetermined amount of time, that it is a particular time of the day/night, or that the state of charge of the first battery 5 is equal to or lower than a predefined state of charge. The determination as to whether this condition is fulfilled may be performed using a determination unit of the robot device 1 (not shown in Fig. 3).

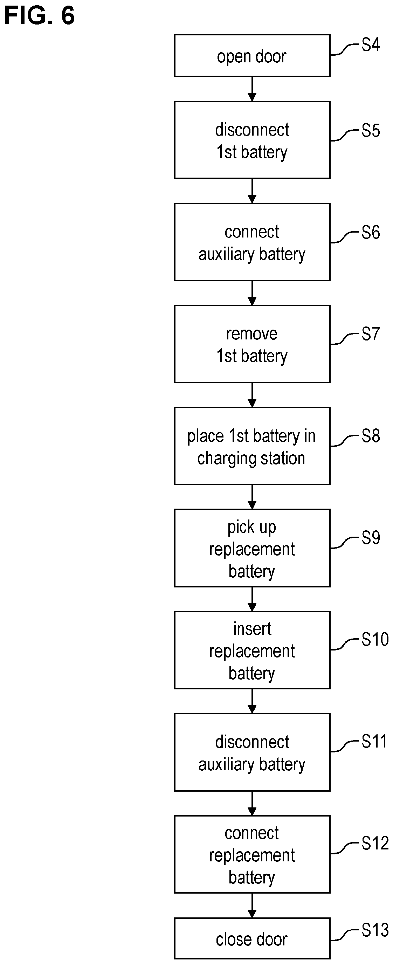

The robot device 50 can be used to perform the method steps of Fig. 2. A replacement of the first battery 5 of the robot device 50 will be explained in the following based on Fig. 5 and 6, wherein Fig. 6 shows a method for operating a mobile robot device 50 according to a second embodiment. The method steps of Fig. 6 are all part of the method step S3 of Fig. 2.

In detail, in a step S4 of the method of Fig. 6, the robot arm 4 (powered by the first battery 5) opens a door 24 of a first battery compartment 23 of the robot unit 1. In steps S5 and S6, the first battery 5 is disconnected from the robot arm 4 and the auxiliary battery 6 is connected to the robot arm 4, respectively. This is achieved by switching the switching unit 11 from the position in Fig. 3 to the position in Fig. 5, thereby connecting the auxiliary battery 6 to the robot arm 4 and disconnecting the first battery 5 from the robot arm 4. This allows the robot arm 4 to be powered by the auxiliary battery 6 temporarily.

In a step S7 of Fig. 6, the robot arm 4 (powered by the auxiliary battery 6) removes the first battery 5 from the compartment 23. In a step S8 of Fig. 6, the robot arm 4 places the removed first battery 5 into the rack 18 of the charging station 17 for charging.

In a step S9 of Fig. 6, the robot arm 4 (powered by the auxiliary battery 6) picks up a replacement battery 7 from the charging station 17. This is the stage illustrated in Fig. 5, in which an empty battery slot 25 (from which the first battery 5 was removed) is shown. In a step S10 of Fig. 6, the robot arm 4 (powered by the auxiliary battery 6) inserts the replacement battery 7 into the compartment 23.

In steps S11 and S12 of Fig. 6, the auxiliary battery 6 is disconnected from the robot arm 4 and the replacement battery 7 is connected to the robot arm 4, respectively. This is achieved by switching the switching unit 11 from the position in Fig. 5 to the position in Fig. 3, thereby connecting the replacement battery 7 to the robot arm 4 and disconnecting the auxiliary battery 6 from the robot arm 4. As a result, the replacement battery 7 provides the robot arm 4 with electric power and replaces the previous first battery 5.

In a step S13 of Fig. 6, the robot arm 4 (powered by the replacement battery 7) is used to close the door 24 of the compartment 23. The robot device 1 can then be used to normally resume the production process.

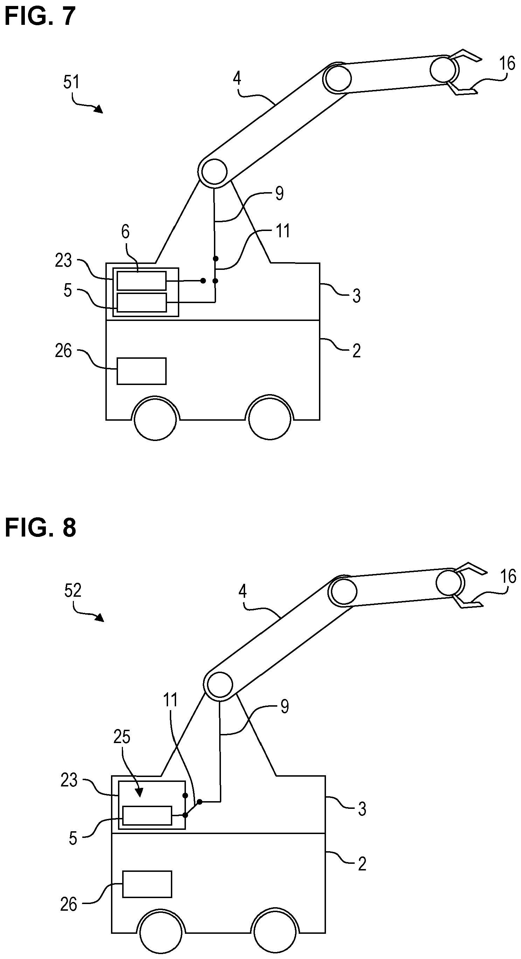

Fig. 7 shows a mobile robot device 51 according to a third embodiment. The mobile robot device 51 is mostly identical with the mobile robot devices 1, 50 of Fig. 1 and 3.

However, in the example of Fig. 7, the auxiliary battery 6 is provided in the robot unit 3 rather than being provided in the vehicle unit 2. In Fig. 7, the auxiliary battery 6 is arranged in the compartment 23 in a different battery slot than the first battery 5. The switching device 11 allows switching between the two batteries 5, 6 in the same manner as described above.

In the example of Fig. 7, the auxiliary battery 6 is a second battery. The auxiliary battery 6 of Fig. 7 is not used to power the vehicle unit 2. Rather, the vehicle unit 2 is provided with a separate vehicle battery 26, which powers the vehicle unit 2 only and cannot be used to power the robot arm 4.

The replacement of the first battery 5 of Fig. 7 can be performed along the same lines as explained in view of Fig. 2 and 6 above.

Fig. 8 shows a mobile robot device 52 according to a fourth embodiment. The mobile robot device 51 is mostly identical with the mobile robot devices 1, 50 of Fig. 1 and 3.

However, the compartment 23 includes multiple slots for first batteries 5 for powering the robot arm 4. The multiple first batteries 5 can be connected to the robot arm 4 individually. Using multiple first batteries allows increasing the autonomy of the robot unit 3.

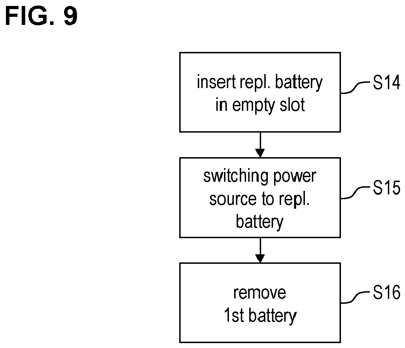

In the robot device 52, the battery replacement is performed according to the method of Fig. 9. Fig. 9 shows a method for operating a mobile robot device 52 according to a third embodiment.

In detail, the method steps of Fig. 9 can be part of step S3 of Fig. 2. In detail, in step S14 of Fig. 9, the auxiliary battery 6 (replacement battery 7) is inserted into the empty slot 25 using the robot arm 4 powered by the first battery 5. In a step S15 of Fig. 9, the power supply to the robot arm 4 is switched from the first battery 5 to the inserted auxiliary battery 6 by accordingly changing the position of the switching unit 11. In a step S16, the robot arm 4 removes the first battery 5 using power from the auxiliary battery 6. The auxiliary battery 6 becomes the "new" first battery 5.

Although the present invention has been described in accordance with preferred embodiments, it is obvious for the person skilled in the art that modifications are possible in all embodiments.

### REFERENCE NUMERALS

- 1: mobile robot device
- 2: vehicle unit
- 3: robot unit
- 4: moveable robot arm
- 5: first battery
- 6: auxiliary battery
- 7: replacement battery
- 8: robot arm motor
- 9: electric connection
- 10: wheel
- 11: switching unit
- 12: sensor unit
- 13: identification unit
- 14: path determination unit
- 15: control unit
- 16: robot tool
- 17: charging station
- 18: rack
- 19: obstacle
- 20: component
- 21: map
- 22: path
- 23: first battery compartment
- 24: door
- 25: empty slot
- 26: vehicle battery
- 50, 51, 52: mobile robot device
- 100: production system
- S1 - S16: method steps

## Claims

1. A mobile robot device (1, 50, 51, 52), comprising:
a vehicle unit (2) for displacing the mobile robot device (1, 50, 51, 52);
a robot unit (3) carried by the vehicle unit (2), the robot unit (3) including at least one moveable robot arm (4);
a first battery (5) arranged within the robot unit (3) and configured to provide the moveable robot arm (4) with electric power; and
an auxiliary battery (6) arranged within the mobile robot device (1, 50, 51, 52); wherein
the moveable robot arm (4) is configured to replace the first battery (5) with a replacement battery (7) or with the auxiliary battery (6); and
the auxiliary battery (6) is configured to provide the moveable robot arm (4) with electric power to replace the first battery (5) with the replacement battery (7).

2. The mobile robot device according to claim 1, wherein the auxiliary battery (6) is a second battery arranged within the robot unit (3) and exclusively configured to provide the robot unit (3) with electric power and/or a third battery arranged within the vehicle unit (2) and further configured to provide the vehicle unit (2) with electric power for displacing the mobile robot device (1, 50, 51, 52).

3. The mobile robot device according to claim 1 or 2, further comprising a switching unit (11) for switching an electric power supply to the moveable robot arm (4) between the first battery (5) and the auxiliary battery (6).

4. The mobile robot device according to one of claims 1 to 3, wherein
the vehicle unit (2) and/or the robot unit (3) includes a sensor unit (12) for determining properties of the area surrounding the vehicle unit (2) as surrounding information; and
the vehicle unit (2) includes:
an identification unit (13) for identifying a location of a charging station (17) providing the replacement battery (7) based on the surrounding information;
a path determination unit (14) for determining a path (22) to the charging station (17) based on the identified location of the charging station (17); and
a control unit (15) for controlling the vehicle unit (2) to autonomously displace the mobile robot device (1, 50, 51, 52) to the charging station (17) following the determined path (22).

5. The mobile robot device according to claim 4, wherein the sensor unit (12) includes a camera, a proximity sensor, a temperature sensor and/or a radar.

6. The mobile robot device according to claim 4 or 5, wherein the mobile robot device (1, 50, 51, 52) includes a determination unit for determining whether it is time to replace the first battery (5), and wherein the control unit is configured to control the vehicle unit (2) to autonomously displace the mobile robot device (1, 50, 51, 52) to the charging station (17) following the determined path if the determination unit determines that it is time to replace the first battery (5).

7. The mobile robot device according to claim 6, wherein the determination unit determines that it is time to replace the first battery (5) when:
a state of charge of the first battery (5) is detected to be below a predefined state of charge threshold;
the first battery (5) has been present in the robot unit (3) for a predefined duration or more;
a process performed by the mobile robot device (1, 50, 51, 52) schedules a replacement of the first battery (5).

8. The mobile robot device according to one of claims 1 to 7, wherein the moveable robot arm (4) is configured to exclusively receive electric power from the auxiliary battery (6) and/or the first battery (5) to replace the first battery (5) with the replacement battery (7) or the auxiliary battery (6).

9. The mobile robot device according to one of claims 1 to 8, wherein the robot unit (3) and the vehicle unit (2) are removably connected to one another in a mechanical, electrical and/or communicative manner.

10. The mobile robot device according to one of claims 1 to 9, wherein the moveable robot arm (4) is configured to replace the first battery (5) by:
opening a door (24) of a slot holding the first battery (5);
electrically disconnecting the first battery (5) from the robot unit (3);
removing the first battery (5) from its slot;
placing the first battery (5) into a charging compartment in the charging station (17);
picking up the replacement battery (7) from the charging station (17) and inserting it into the slot of the mobile robot device (1, 50, 51, 52);
connecting the replacement battery (7) to the robot unit (3); and/or
closing the door (24) of the slot.

11. The mobile robot device according to one of claims 4 to 10, wherein the vehicle unit (2) is further configured to displace the mobile robot device (1, 50, 51, 52) such as to electrically connect the third battery with a charging unit of the charging station (17).

12. A method for operating a mobile robot device (1, 50, 51, 52), in particular the mobile robot device (1, 50, 51, 52) according to one of claims 1 to 11, the method including:
displacing (S1) the mobile robot device (1, 50, 51, 52) using a vehicle unit (2);
moving (S2) a moveable robot arm (4) of a robot unit (3) using electric power from a first battery (5) arranged within the robot unit (3); and
replacing (S3) the first battery (5) with a replacement battery (7) or with an auxiliary battery (6) of the mobile robot device (1, 50, 51, 52) using the moveable robot arm (4), wherein during the replacement of the first battery (5) by the replacement battery (7), the moveable robot arm (4) is electrically powered by the auxiliary battery (6).

13. The method according to claim 12, comprising:
switching the electric power provision to the moveable robot arm (4) from the first battery (5) to the auxiliary battery (6) for the replacement of the first battery (5).

14. The method according to claim 12, wherein the mobile robot device (1, 50, 51, 52) includes several slots which are each configured to hold one of the batteries, and wherein the replacement of the first battery (5) includes:
inserting (S14) the replacement battery (7) into an empty slot of the several slots using the moveable robot arm (4) using electric power from the first battery (5);
switching (S15) a power source for powering the robot unit (3) from the first battery (5) to the replacement battery (7); and
removing (S16) the first battery (5) from its slot with the moveable robot arm (4) using electric power from the replacement battery (7).

15. A computer program product comprising instructions which, when the program is executed by a computer, cause the computer to carry out the method of one of claims 12 to 14.
